# EUROPEAN PATENT SPECIFICATION

(11) **EP 3 220 590 B1**
(45) Date of publication and mention of the grant of the patent: **12.02.2020**
(21) Application number: 15859949.8
(22) Date of filing: 06.11.2015
(51) Int. Cl.: B60L 53/14

(54) **COMMUNICATION SYSTEM AND COMMUNICATION DEVICE**
KOMMUNIKATIONSSYSTEM UND KOMMUNIKATIONSVORRICHTUNG
SYSTÈME DE COMMUNICATION ET DISPOSITIF DE COMMUNICATION

(30) Priority: 14.11.2014 JP 2014232037
(43) Date of publication of application: 20.09.2017
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP); TOYOTA JIDOSHA KABUSHIKI KAISHA, Toyota-shi, Aichi-ken 471-8571 (JP)
(72) Inventor: OKADA, Ryo, Yokkaichi-shi Mie 510-8503 (JP); HAGIHARA, Takeshi, Yokkaichi-shi Mie 510-8503 (JP); TANAKA, Ryo, Osaka-shi Osaka 5540024 (JP); NAKAGAWA, Nobuyuki, Toyota-shi Aichi 471-8571 (JP); HAYASHIZAKI, Kengo, Toyota-shi Aichi 471-8571 (JP)
(74) Representative: Horn Kleimann Waitzhofer Patentanwälte PartG mbB
(86) International application number: PCT/JP2015/081281
(87) International publication number: WO 2016/076215

(56) References cited:
- EP-A1- 2 790 329
- JP-A- 2010 239 850
- JP-A- 2013 187 850
- JP-A- 2013 215 059
- JP-A- 2013 215 059

## Description

### [Field of the Invention]

The present invention relates to a communication system in which a control line transmitting a control signal for controlling charging of a battery of a vehicle and a reference potential line connected to a reference potential of the vehicle are employed so that a differential signal is superposed on the control signal and thereby communication with an external power supply apparatus is achieved. Further, the present invention relates to a communication device constituting the communication system.

### [Background of the Invention]

Spreading are: plug-in hybrid electric vehicles (PHEVs) employing an electric motor and a combustion engine in combination; and electric vehicles (EVs) driven by an electric motor without employing a combustion engine. A vehicle such as a plug-in hybrid electric vehicle and an electric vehicle includes a battery driving the electric motor. Then, charging of the battery is performed by using an external power supply apparatus installed in an electricity supply station, an ordinary house, or the like.

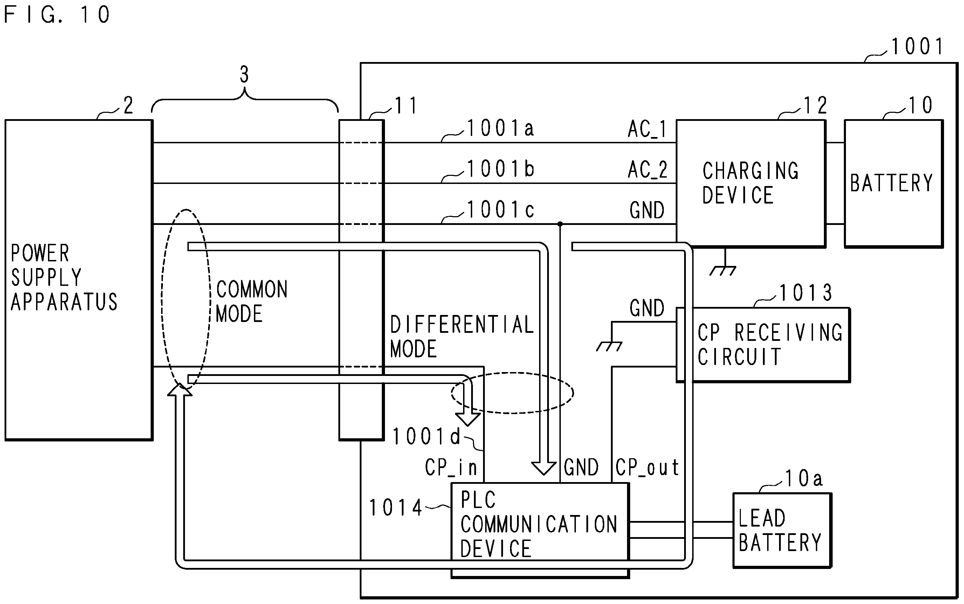

FIG. 10 is a block diagram illustrating the configuration of a vehicle connected to a power supply apparatus. A power supply apparatus 2 includes a charging cable 3 whose end is provided with a charging gun to be connected to a vehicle 1001. The vehicle 1001 includes a connector 11 to which the charging gun is to be connected. Thus, with a user connects the charging gun to the connector 11, the power supply apparatus 2 is allowed to be connected to the vehicle 1001. The charging cable 3 includes: two power feed lines 1001a and 1001b; a reference potential line 1001c; a control line 1001d; and a connection detection line (not illustrated) detecting the connection of the charging gun. The power feed lines 1001a and 1001b are connected to a charging device 12 mounted on the vehicle 1001. The reference potential line 1001c is connected through the charging device 12 to the reference potential. For example, the reference potential is a body ground of the vehicle 1001. The power supply apparatus 2 supplies an alternating current through the power feed lines 1001a and 1001b to the charging device 12. Then, the charging device 12 converts the supplied alternating current into a direct current and then performs charging of the battery 10. The control line 1001d is connected through a PLC communication device 1014 to a CP receiving circuit 1013. The CP receiving circuit 1013 is a circuit receiving a pilot signal transmitted from the power supply apparatus 2. Then, in accordance with the transmission and reception of the control pilot signal, the power supply apparatus 2 performs charging control (e.g., Non-patent Document 1). The control pilot signal is a signal of rectangular wave form. Then, in accordance with the potential of the rectangular wave signal relative to the reference potential, the presence or absence of the rectangular wave signal, and the like, the power supply apparatus 2 transmits and receives information concerning the charging such as the permission or non-permission of charging and the charging status.

Further, the PLC communication device 1014 connected individually to the control line 1001d and the reference potential line 1001c is mounted on the vehicle 1001. The PLC communication device 1014 is connected to the lead battery 10a and the lead battery 10a is also connected to the reference potential of the vehicle 1001. The PLC communication device 1014 superposes a differential signal having a higher frequency than the control pilot signal, for example, a differential signal of 2 to 30 MHz, onto the control pilot signal or, alternatively, separates a differential signal superposed on the pilot signal so as to perform communication employing a differential signal. The power supply apparatus 2 transmits and receives the differential signal to and from the PLC communication device 1014 so as to be allowed to perform more advanced information communication than that performed by employing the pilot signal.

### [Prior Art References]

### [Patent Documents]

[Non-patent Document 1] "SURFACE VEHICLE RECOMMENDED PRACTICE", J1772 FEB2012, Society of Automotive Engineers, Inc., October 1996 (Revised version, February 2012).

JP 2013 215059 A discloses a communication system for inband communication, in which a vehicle and a power supply device are connected via a charging cable containing a power supply line, a grounding line, and a control line, and a communication signal is transmitted and received by a communication device using the grounding line and the control line as media. A common mode choke coil interposed between the grounding line and the control line prevents common mode noise from flowing into the communication device.

### [Summary of the Invention]

### [Problems to be Solved by the Invention]

As described above, the PLC communication device 1014 transmits and receives the differential signal through the control line 1001d and the reference potential line 1001c. The control line 1001d is connected to the PLC communication device 1014 having a given impedance. However, the reference potential line 1001c is connected to a body ground having a low impedance. An anode of the lead battery 10a connected to the PLC communication device 1014 is connected to the body ground. Thus, in this configuration, the balance of the PLC communication device 1014 is unsatisfactory. Accordingly, a common mode noise generated in the control line 1001d and the reference potential line 1001c through the body ground or the like is converted into a noise of differential mode and then inputted to the PLC communication device 1014 as illustrated in FIG. 10. The PLC communication device 1014 performs communication by using a differential signal of 2 to 30 MHz. Thus, a noise of differential mode of 2 to 30 MHz is not allowed to be separated and removed. This has caused a problem of malfunctioning of the PLC communication device 1014.

Here, a method may be employed that a common-mode choke coil is provided in the control line 1001d and the reference potential line 1001c so that the malfunctioning of the PLC communication device 1014 is avoided. However, in some cases, the noise generated in the control line 1001d and the reference potential line 1001c is not allowed to be effectively removed. This is expected to be because a part of the common mode noise generated in the control line 1001d and the reference potential line 1001c is not removed by the common-mode choke coil and is converted into a noise of differential mode so as to be inputted to the PLC communication device 1014.

The present invention has been devised in view of such situations. An object thereof is to provide a communication system in which a noise converted from a common mode into a differential mode and then inputted to a PLC communication device is reduced so that malfunctioning of the PLC communication device is avoidable. Further, another object is to provide a communication device constituting the communication system.

### [Means for Solving the Problem]

The invention is defined in the independent claim. Advantageous embodiments are set out in the dependent claims. Aspects or embodiments that do not fall under the scope of the claims are useful to understand the invention.

### [Effect of the Invention]

The configurations defined in the claims are allowed to provide: a communication system and communication device in which a noise converted from a common mode into a differential mode and then inputted to a PLC communication device is reduced so that malfunctioning of the PLC communication device is avoidable.

### [Brief Description of the Drawings]

FIG. 1 is a circuit block diagram illustrating an exemplary configuration of a communication system according to Embodiment 1.
FIG. 2 is a graph representing a relation between a longitudinal conversion loss and a radiated noise.
FIG. 3 is a circuit block diagram illustrating an exemplary configuration of a communication system according to Embodiment 2.
FIG. 4 is a circuit block diagram illustrating an exemplary configuration of a communication system according to Embodiment 3.
FIG. 5 is a schematic diagram illustrating a configuration of a connector according to Embodiment 3.
FIG. 6 is a circuit block diagram illustrating an exemplary configuration of a communication system according to Embodiment 4.
FIG. 7 is a circuit block diagram illustrating an exemplary configuration of a communication system according to Embodiment 5.
FIG. 8 is a circuit block diagram illustrating an exemplary configuration of a communication system according to Embodiment 6.
FIG. 9 is a circuit block diagram illustrating an exemplary configuration of a communication system according to Embodiment 7.
FIG. 10 is a block diagram illustrating a configuration of a vehicle connected to a power supply apparatus.

### [Mode of Implementing the Invention]

### [Description of embodiments of present invention]

First, aspects of the present invention are listed and described below. Further, at least a part of the embodiments described below may arbitrarily be combined with each other.
(1) A communication system according to an aspect of the present invention is a communication system comprising: a control line transmitting a control signal for controlling charging of a battery mounted on a vehicle; a reference potential line connected to a reference potential of the vehicle serving as a reference for the control signal; a communication device connected individually to the control line and the reference potential line and superposing onto the control signal a differential signal having a higher frequency than the control signal so as to perform communication with an external power supply apparatus; a first inductive element which is provided at a point of connection between the reference potential line and the reference potential or provided in the reference potential line and the first inductive element having impedance for a noise having a higher frequency than the control signal is higher than the impedance for the control signal; a wire for connecting the communication device to another battery; and a second inductive element which is provided at a point of connection between the wire and the another battery or provided in the wire and the second inductive element having impedance for a noise having a higher frequency than the control signal is higher than the impedance for the control signal.
   The first inductive element is provided at the point of connection between the reference potential line and the reference potential or provided in the reference potential line. Further, the second inductive element is provided at the point of connection between the wire for connecting the communication device to another battery and the another battery or provided in the wire. In each inductive element, the impedance for a noise having a higher frequency than the control signal is higher than the impedance for the control signal. Thus, as for the noise, the balance of the communication device connected to the control line and the reference potential line is better than that of a device not provided with the first and the second inductive element. Thus, a situation is suppressed that a common mode noise generated in the control line and the reference potential line is converted into a differential mode noise. Accordingly, malfunctioning of the communication device caused by the differential mode noise is avoidable.
(2) A configuration is preferable that the communication device includes: a circuit board holding the second inductive element; and a cover made of resin and covering the circuit board holding the second inductive element.
   The second inductive element is held on the circuit board and covered by the cover made of resin. Thus, a situation is allowed to be more effectively avoided that the second inductive element goes into contact with an internal structure of the vehicle owing to the shakiness or the vibration of the vehicle so as to be damaged.
(3) A configuration is preferable that the communication device includes: a filter separating the differential signal from the control signal; and a coupling transformer connected to the filter, and wherein the cover is constructed such as to cover the filter and the coupling transformer.
   The second inductive element, the filter, and the coupling core held on the circuit board are covered by the cover. Thus, a situation is allowed to be more effectively avoided that each electronic component goes into contact with an internal structure of the vehicle owing to the shakiness or the vibration of the vehicle so as to be damaged.
(4) A configuration is preferable that the communication system comprises a receiving circuit connected to the control line so as to receive a control signal transmitted from the external power supply apparatus.
(5) Such a configuration is preferable that the communication system comprises a third inductive element which is provided in a wire connecting the receiving circuit to the reference potential and the third inductive element having impedance for a noise having a higher frequency than the control signal is higher than the impedance for the control signal.
   The third inductive element is provided in the wire connecting the receiving circuit to the reference potential. In the third inductive element, the impedance for a noise having a higher frequency than the control signal is higher than the impedance for the control signal. Thus, as for the noise, the balance of the communication device connected to the control line and the reference potential line is better than that of a device not provided with the third inductive element. Thus, a situation is suppressed that a common mode noise generated in the control line and the reference potential line is converted into a differential mode noise. Accordingly, the malfunctioning of the communication device caused by the differential mode noise is allowed to be more effectively avoided.
(6) A communication device according to an aspect of the present invention is a communication device which is connected individually to a control line transmitting a control signal for controlling charging of a battery mounted on a vehicle and to a reference potential line connected to a reference potential of the vehicle serving as a reference for the control signal and which superposes onto the control signal a differential signal having a higher frequency than the control signal so as to perform communication with an external power supply apparatus, comprising: a wire for connecting the communication device to another battery; and an inductive element which is provided at a point of connection between the wire and the another battery or provided in the wire and the inductive element having impedance for a noise having a higher frequency than the control signal is higher than the impedance for the control signal.

The inductive element is provided at the point of connection between the wire connecting the communication device to another battery and the another battery or provided in the wire. In the inductive element, the impedance for a noise having a higher frequency than the control signal is higher than the impedance for the control signal. Thus, as for the noise, the balance of the communication device connected to the control line and the reference potential line is better than that of a device not provided with the inductive element. Thus, a situation is suppressed that a common mode noise generated in the control line and the reference potential line is converted into a differential mode noise. Accordingly, malfunctioning of the communication device caused by the differential mode noise is allowed to be avoided.

Further, the inductive element is arranged in the inside of the communication device. Thus, a situation is allowed to be avoided that the inductive element goes into contact with an internal structure of the vehicle owing to the shakiness or the vibration of the vehicle so as to be damaged.

### [Details of embodiments of present invention]

Detailed examples of the communication system and the connector according to the embodiments of the present invention are described below with reference to the drawings. Here, the present invention is not limited to these exemplifications and intended to include all changes within the scope of the claims and the scope or the meaning equivalent thereto. Further, at least a part of the embodiments described below may be arbitrarily combined together.

### (Embodiment 1)

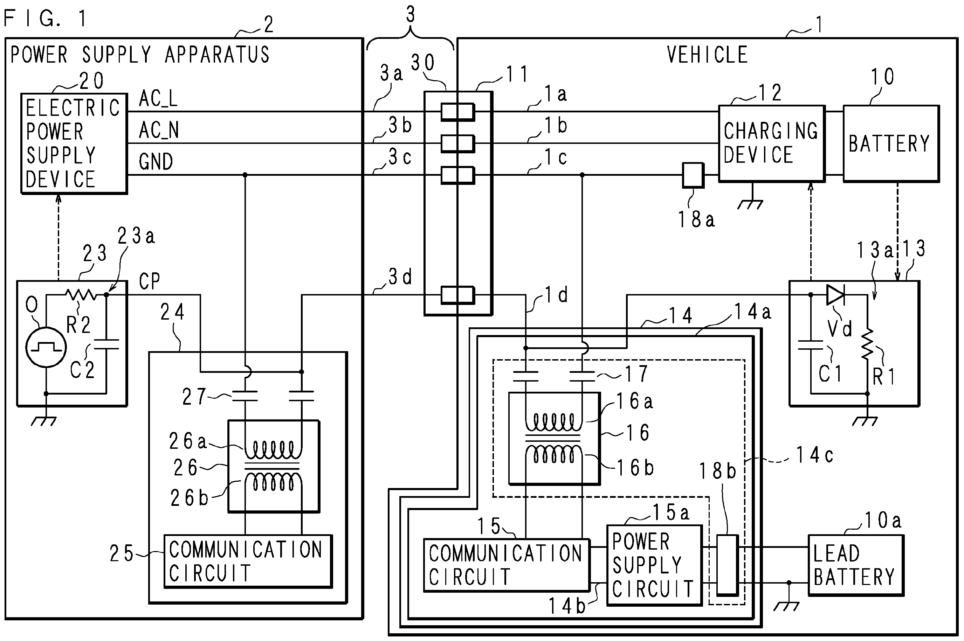

FIG. 1 is a circuit block diagram illustrating an exemplary configuration of a communication system according to Embodiment 1.

The communication system of Embodiment 1 includes: a vehicle 1 such as a plug-in hybrid electric vehicle and an electric vehicle; and a power supply apparatus 2 supplying electric power through a charging cable 3 to a battery 10 of the vehicle 1.

In the charging cable 3, one end part thereof is connected to the power supply apparatus 2 and then a charging gun 30 is provided in the other end part of the charging cable 3. The charging cable 3 includes: two power feed lines 3a and 3b; a reference potential line 3c; a control line 3d; and a connection detection line (not illustrated) detecting the connection of the charging gun 30 to the vehicle 1. The power feed lines 3a and 3b are lead wires on which a voltage of alternating current outputted from the power supply apparatus 2 is applied. The control line 3d is a lead wire transmitting a control pilot signal (a control signal) for controlling the charging of the battery 10 mounted on the vehicle 1. The reference potential line 3c is a lead wire connected to a reference potential such as the body ground of the vehicle 1 serving as a reference for the control pilot signal. Further, as described later, the control line 3d and the reference potential line 3c serve also as a transmission medium of a differential signal.

The charging gun 30 includes: a grip part of gun grip shape; a plug; an insertion guide used for connection to the connector 11 of the vehicle 1; and a latch locking with the vehicle 1. The plug of the charging gun 30 has a shape allowed to be connected to the connector 11 of the vehicle 1. Then, the plug includes: AC supply terminals outputting the alternating current supplied from the power supply apparatus 2; a common potential terminal connecting to the reference potential; a control pilot signal terminal through which the control pilot signal is inputted and outputted; and connection detecting terminal.

The power supply apparatus 2 includes an electric power supply device 20, a second charging control device 23, and a second PLC communication device 24. The electric power supply device 20 is connected to one end part of each of the power feed lines 3a and 3b and the reference potential line 3c. Then, the electric power supply device 20 supplies an alternating current through the power feed lines 3a and 3b to the vehicle 1. The operation of the electric power supply device 20 is controlled by the second charging control device 23.

The second charging control device 23 includes a CP transmitting circuit 23a and a microcomputer (not illustrated). The CP transmitting circuit 23a is connected to the control line 3d. Then, the CP transmitting circuit 23a transmits and receives the control pilot signal controlling the charging of the battery 10 mounted on the vehicle 1. For example, the control pilot signal is a rectangular wave signal of 1 kHz. Then, in accordance with the potential of the rectangular wave signal relative to the reference potential, the presence or absence of the rectangular wave signal, and the like, the second charging control device 23 transmits and receives information concerning the charging such as the confirmation of connection between the power supply apparatus 2 and the vehicle 1, the permission or non-permission of charging, and the charging status.

Specifically, the CP transmitting circuit 23a includes: a capacitor C2; a resistor R2; and an oscillation circuit O outputting a rectangular wave signal. One terminal of the oscillation circuit O is connected to the reference potential and the other terminal is connected to one end of the resistor R2. The other end of the resistor R2 is connected to one end of the capacitor C2 and the other end of the capacitor C2 is connected to the reference potential. One end of the control line 3d is connected to the other end of the resistor R2. A microcomputer of the second charging control device 23 controls the operation of the oscillation circuit O so as to transmit the control pilot signal. Further, the second charging control device 23 includes a voltage detection circuit detecting the voltage of the control pilot signal applied on the control line 3d. Then, the microcomputer acquires through the voltage detection circuit information outputted from the vehicle 1 and then controls the operation of the electric power supply device 20.

The second PLC communication device 24 is connected individually to the control line 3d and the reference potential line 3c and then transmits and receives information concerning the charging, to and from the vehicle 1 through the control line 3d and the reference potential line 3c. The second PLC communication device 24 performs communication with the vehicle 1 by superposing on the control pilot signal a differential signal having a higher frequency than the control pilot signal, for example, a differential signal of 2 to 30 MHz.

Specifically, the second PLC communication device 24 includes: coupling capacitors 27 and a coupling transformer 26 separating from the control pilot signal the differential signal superposed on the control pilot signal; and a communication circuit 25 transmitting and receiving the differential signal.

Two branch lines each branching off from the control line 3d or the reference potential line 3c are connected through the coupling capacitors 27 to the coupling transformer 26. Each coupling capacitor 27 has a high impedance for the control pilot signal and has a low impedance for the differential signal. For example, the coupling capacitor 27 is constructed from a capacitor having an electrostatic capacitance of 1 nF.

The coupling transformer 26 includes a primary coil 26a and a secondary coil 26b magnetically coupled to the primary coil 26a. The two branch lines are connected through the coupling capacitors 27 to both ends of the primary coil 26a. Both ends of the secondary coil 26b are connected to the communication circuit 25. The communication circuit 25 includes a band pass filter cutting off a signal outside the frequency band of the differential signal and thereby receives the differential signal having been separated by the coupling capacitors 27 and the coupling transformer 26 and then having passed through the band pass filter. Further, the communication circuit 25 provides a to-be-transmitted signal to the secondary coil 26b so as to transmit a differential signal.

The vehicle 1 includes a battery 10, a lead battery (another battery) 10a, a connector 11, a charging device 12, a first charging control device 13, a first PLC communication device (communication device) 14, and an inductive element 18a.

The connector 11 is provided as a power feed port at a suitable point of the vehicle 1. Then, when the plug of the charging gun 30 is connected to the connector 11, the vehicle 1 is connected through the charging cable 3 to the power supply apparatus 2. The connector 11 includes connection parts individually connected to the individual connection terminals of the plug. Then, each connection part is connected to one end part of each of power feed lines 1a and 1b, a reference potential line 1c, and a control line 1d which constitute internal wires. That is, when the plug of the charging gun 30 is connected to the connector 11, the connection terminals of the plug are electrically connected to the connection parts of the connector 11 so that the power feed lines 3a and 3b, the reference potential line 3c, and the control line 3d of the charging cable 3 are connected to the power feed lines 1a and 1b, the reference potential line 1c, and the control line 1d in the inside of the vehicle 1.

The charging device 12 is connected to the other end part of each of the power feed lines 1a and 1b and the reference potential line 1c. The charging device 12 is a device converting the alternating current supplied from the power supply apparatus 2 through the power feed lines 1a, 1b, 3a, and 3b into a direct current, and then performing the charging of the battery 10. The operation of the charging device 12 is controlled by the first charging control device 13. The reference potential line 1c arranged in the inside of the vehicle 1 is connected through the charging device 12 to the reference potential. For example, the reference potential is the body ground.

The inductive element 18a is provided in the reference potential line 1c. Specifically, the inductive element 18a is provided on the charging device 12 side relative to a point where the branch line branches off from the reference potential line 1c to the first PLC communication device 14. The impedance of the inductive element 18a for a noise of high frequency is higher than the impedance of the inductive element 18a for the control pilot signal. The high frequency mentioned here indicates a higher frequency than the frequency of the control pilot signal. For example, the inductive element 18a is a choke coil inserted into the reference potential line 1c. For example, the capacity of the inductive element 18a is 50 µH.

Here, the above-described position where the inductive element 18a is provided is exemplary. That is, the inductive element 18a may be provided in the wire connecting the charging device 12 to the reference potential. Further, the inductive element 18a may be provided in the reference potential line 1c arranged in the inside of the charging device 12.

The first charging control device 13 includes a CP receiving circuit (a receiving circuit) 13a and a microcomputer (not illustrated). The CP receiving circuit 13a is connected to the other end part of the control line 1d going through the first PLC communication device 14. Then, the CP receiving circuit 13a transmits and receives the control pilot signal controlling the charging of the battery 10 mounted on the vehicle 1. Then, in accordance with the potential of the rectangular wave signal relative to the reference potential, the presence or absence of the rectangular wave signal, and the like, the first charging control device 13 transmits and receives information concerning the charging such as the confirmation of connection between the power supply apparatus 2 and the vehicle 1, the permission or non-permission of charging, and the charging status.

Specifically, the CP receiving circuit 13a includes a capacitor C1, a resistor R1, and a diode Vd. The other end part of the control line 1d is connected to the anode of the diode Vd and one end of the capacitor C1. Then, the other end of the capacitor C1 is connected to the reference potential. The cathode of the diode Vd is connected to one end of the resistor R1 and then the other end of the resistor R1 is connected to the reference potential. For example, the resistor R1 is a variable resistor. Then, the microcomputer of the first charging control device 13 changes the resistance of the resistor R1 so as to control the potential of the control pilot signal and thereby transmits the information concerning the charging control to the power supply apparatus 2. Further, the first charging control device 13 includes a voltage detection circuit detecting the voltage of the control pilot signal applied on the control line 1d. Then, the microcomputer acquires through the voltage detection circuit the information outputted from the vehicle 1 and then controls the operation of the charging device 12.

The first PLC communication device 14 is connected individually to the control line 1d and the reference potential line 1c and then transmits and receives the information concerning the charging, to and from the power supply apparatus 2 through the control line 1d and 3d and the reference potential line 1c and 3c. The first PLC communication device 14 performs communication with the vehicle 1 by superposing on the control pilot signal a differential signal having a higher frequency than the control pilot signal.

Specifically, the first PLC communication device 14 includes: coupling capacitors (a filter) 17 and a coupling transformer 16 separating from the control pilot signal the differential signal superposed on the control pilot signal; and a communication circuit 15 transmitting and receiving the differential signal.

Two branch lines each branching off from the control line 1d or the reference potential line 1c are connected through the coupling capacitors 17 to the coupling transformer 16. Each coupling capacitor 17 has a high impedance for the control pilot signal and has a low impedance for the differential signal.

The coupling transformer 16 includes a primary coil 16a and a secondary coil 16b magnetically coupled to the primary coil 16a. The two branch lines are connected through the coupling capacitors 17 to both ends of the primary coil 16a. Both ends of the secondary coil 16b are connected to the communication circuit 15. The communication circuit 15 includes a band pass filter cutting off a signal outside the frequency band of the differential signal and thereby receives the differential signal having been separated by the coupling capacitors 17 and the coupling transformer 16 and then having passed through the band pass filter. Further, the communication circuit 15 provides a to-be-transmitted signal to the secondary coil 16b so as to transmit a differential signal.

Further, a power supply circuit 15a supplying electric power to the communication circuit 15 is connected through wires 14b to the lead battery 10a. Then, among the two wires 14b, the wire 14b on the ground side is connected to the reference potential. A second inductive element 18b is inserted in each of the two wires 14b. The inductive element 18b is an element whose impedance for a noise having a higher frequency than the control pilot signal is higher than the impedance for the control pilot signal. For example, the inductive element 18b is a choke coil inserted into the wire 14b.

The coupling capacitors 17, the coupling transformer 16, and the second inductive element 18b are arranged on a circuit board 14a. The coupling capacitors 17, the coupling transformer 16, and the second inductive element 18b arranged on the circuit board 14a are covered by a cover 14c made of resin.

Here, FIG. 1 has been described for an example that the second inductive element 18b is arranged in the inside of the first PLC communication device 14. Instead, the second inductive element 18b may be provided in the wires 14b pulled to the outside of the first PLC communication device 14. Alternatively, the second inductive element 18b may be provided at the point of connection between the wires 14b and the lead battery 10a.

According to the communication system having this configuration, by virtue of the inductive elements 18a and 18b provided in the reference potential line 1c and the wires 14b, the balance of the first and the second PLC communication device 14 and 24 for a noise in the same frequency band as the differential signal becomes better than that of a device not provided with the inductive elements 18a and 18b. Thus, a situation is allowed to be suppressed that a common mode noise generated in the control line 1d or 3d and the reference potential line 1c or 3c is converted into a differential mode noise. Accordingly, a noise converted from a common mode into a differential mode and then inputted to the first PLC communication device 14 is reduced so that malfunctioning of the first PLC communication device 14 is avoidable.

Further, a radiated noise is allowed to be reduced.

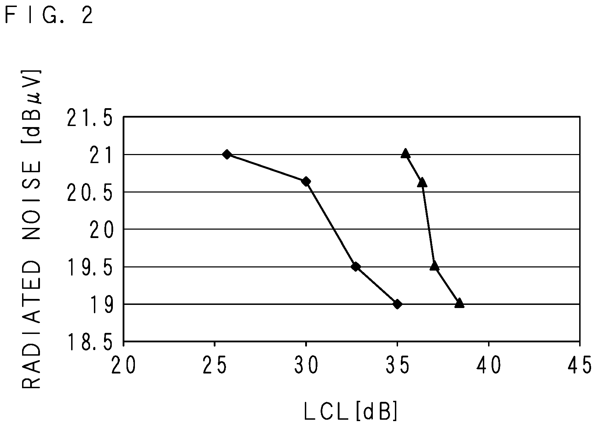

FIG. 2 is a graph representing a relation between the longitudinal conversion loss and the radiated noise. The horizontal axis indicates the longitudinal conversion loss (LCL) of the first and the second PLC communication device 14 and 24 and the vertical axis indicates the actual measurement value of the radiated noise. The graph of rhombus plot indicates the radiated noise in a case that the charging gun 30 has been extracted. The graph of triangular plot indicates the radiated noise in a case that the charging gun 30 has been inserted. As obviously recognized from the actual measurement values of the radiated noise represented in the graph of FIG. 2, the radiated noise decreases with improving balance of the first and the second PLC communication device 14 and 24. As such, by virtue of the inductive element 18a inserted into the reference potential line 1c, malfunctioning of the first PLC communication device 14 is avoided and, at the same time, a radiated noise is allowed to be reduced.

Further, a situation is allowed to be more effectively avoided that the inductive element 18b, the coupling capacitors 17 and the coupling transformer 16 go into contact with an internal structure of the vehicle 1 owing to the shakiness or the vibration of the vehicle 1 so as to be damaged.

### (Embodiment 2)

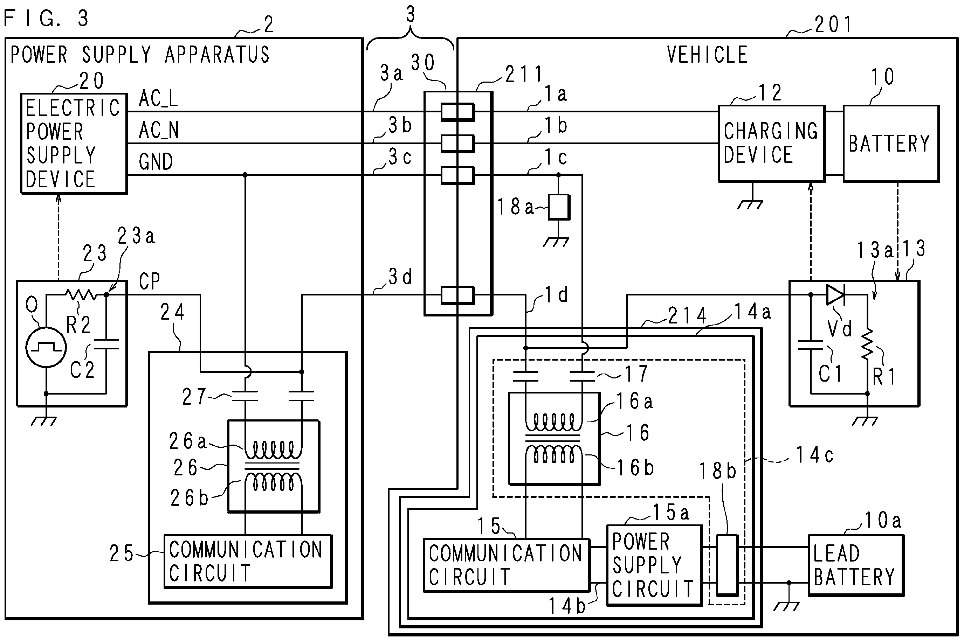

FIG. 3 is a circuit block diagram illustrating an exemplary configuration of a communication system according to Embodiment 2. In the communication system according to Embodiment 2, the wire configuration alone of the reference potential line 1c and the inductive element 18a is different from that of Embodiment 1. Thus, the following description is given mainly for this difference.

One end part of the reference potential line 1c arranged in the inside of the vehicle 201 is connected to the connector 211 and the other end part is connected to the first PLC communication device 214. The branch line branching off from the reference potential line 1c of Embodiment 2 is connected to the reference potential. That is, the reference potential line 1c according to Embodiment 1 has been connected through the charging device 12 to the reference potential. In contrast, the reference potential line 1c according to Embodiment 2 is connected to the reference potential without the intervention of the charging device 12. The inductive element 18a is inserted into the branch line branching off from the reference potential line 1c.

Similarly to Embodiment 1, in the communication system according to Embodiment 2, a noise converted from a common mode into a differential mode and then inputted to the first PLC communication device 214 is reduced so that malfunctioning of the first PLC communication device 214 is avoidable. In particular, in Embodiment 2, since the length of the reference potential line 1c arranged in the inside of the vehicle 201 is short, a possibility is allowed to be reduced that a noise is caused in the reference potential lines 1c and 3c and the control lines 1d and 3d. Thus, the malfunctioning of the first PLC communication device 214 caused by the noise is allowed to be more effectively avoided.

### (Embodiment 3)

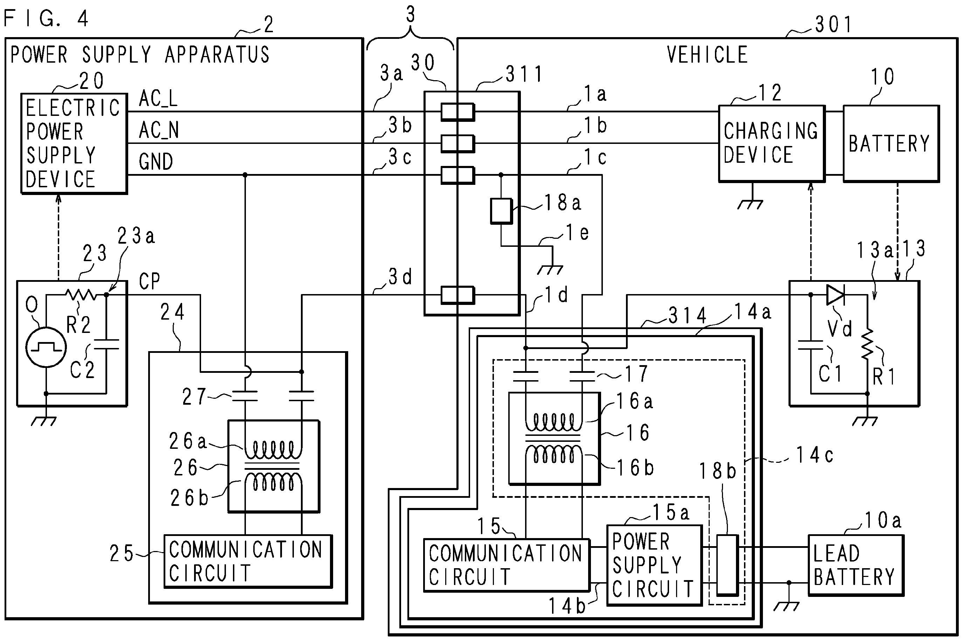

FIG. 4 is a circuit block diagram illustrating an exemplary configuration of a communication system according to Embodiment 3. In the communication system according to Embodiment 3, the wire configuration of the reference potential line 1c and the inductive element 18a and the configuration of the connector 311 are alone different from those of Embodiment 1. Thus, the following description is given mainly for these differences.

One end part of the reference potential line 1c arranged in the inside of the vehicle 301 is connected to the connector 311 and the other end part is connected to the first PLC communication device 314. The connector 311 includes a second reference potential line le branching off from the reference potential line 1c in the inside of the connector 311. Then, the inductive element 18a is inserted into the second reference potential line 1e. The end part of the second reference potential line 1e is pulled from the connector 311 to the inside of the vehicle 301 and then connected to the reference potential.

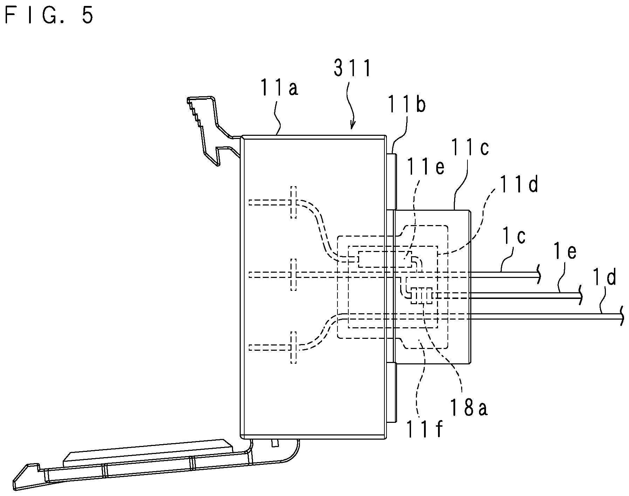

FIG. 5 is a schematic diagram illustrating the configuration of a connector 311 according to Embodiment 3. The connector 311 includes a container member 11a containing connection parts connected individually to the two power feed lines 1a and 1b, the control line 1d, the reference potential lines 1c and 1e arranged in the inside of the vehicle. Here, in FIG. 5, for simplicity of the drawing, the two power feed lines 1a and 1b and the connection parts connected to the power feed lines 1a and 1b are not illustrated. The container member 11a includes an attaching part 11b attached to the vehicle 301. The attaching part 11b has a substantially rectangular plate shape. An attaching hole is formed in each of the four corners of the attaching part 11b so that the container member 11a is allowed to be attached at a given position of the vehicle 301 with screws or the like. A cylindrical part 11c having a cylinder shape protrudes from the center of one face of the attaching part 11b to the inner side of the vehicle 301. In the other face of the attaching part 11b, a plug connection part is provided which has a cylinder shape whose diameter is larger than the cylindrical part 11c and into which the plug of the charging gun 30 is inserted and connected at the time of charging. Further, in the plug connection part, an openable and closable lid part is provided such as to close the opening part.

A circuit board 11d is contained in the inside of the container member 11a and the cylindrical part 11c. An end part of the connection part connected to the reference potential line 3c is fixed to the circuit board 11d. One end part of the reference potential line 1c is connected to the end part of the connection part on the circuit board 11d. Further, the inductive element 18a inserted into the second reference potential line le branching in the one end part of the reference potential line 1c is held on the circuit board 11d. Further, a detection circuit 11e detecting by using the connection detection line the connection of the charging gun 30 is also provided on the circuit board 11d. The inductive element 18a, the detection circuit 11e, and the other various circuits are covered by a cover 11f made of resin. Specifically, the circuit board 11d is resin-molded. The cover 11f is held in the inside of the container member 11a such as not to suffer from vibration.

According to the communication system and the connector 311 of Embodiment 3, the circuit board 11d on which the inductive element 18a is arranged is covered by the cover 11f made of resin and is held in the inside of the container member 11a. Thus, a situation is allowed to be avoided that the inductive element 18a goes into contact with an internal structure of the vehicle 301 owing to the shakiness or the vibration of the vehicle 301 so as to be damaged. Further, operation effects similar to those of Embodiments 1 and 2 are obtained.

### (Embodiment 4)

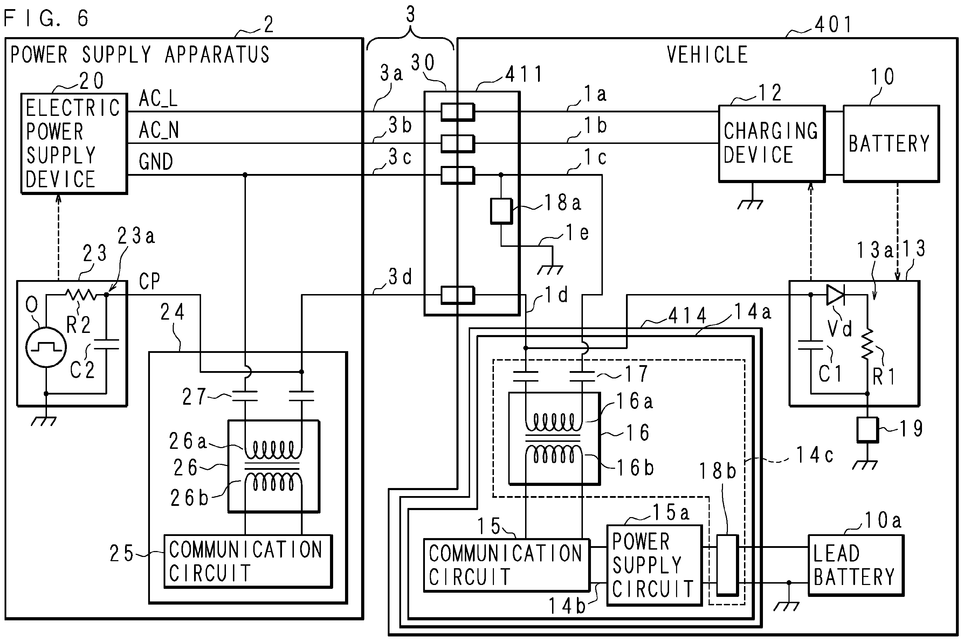

FIG. 6 is a circuit block diagram illustrating an exemplary configuration of a communication system according to Embodiment 4. In the communication system according to Embodiment 4, a configuration that a third inductive element 19 is provided in the first charging control device 13 is different from that of Embodiment 2. Thus, the following description is given mainly for this difference. The configuration of the connector 411 is similar to that of the connector 311 of Embodiment 3.

The first charging control device 13 mounted on a vehicle 401 according to Embodiment 4 is connected through the third inductive element 19 to the reference potential. That is, the third inductive element 19 is inserted into the wire connecting the low-voltage side terminals of the capacitor C1 and the resistor R1 to the reference potential. Similarly to the inductive elements 18a and 18b, also in the third inductive element 19, the impedance for a noise having a higher frequency than the control pilot signal is higher than the impedance for the control pilot signal.

According to the communication system of Embodiment 4, as for a noise in the same frequency band as the differential signal, the balance of the first and the second PLC communication device 414 and 24 each connected to the control line 1d or 3d and the reference potential line 1c or 3c becomes better than that of a device not provided with the third inductive element 19. Accordingly, a noise converted from a common mode into a differential mode and then inputted to the first PLC communication device 414 is reduced so that the malfunctioning of the first PLC communication device 414 is allowed to be more effectively avoided.

### (Embodiment 5)

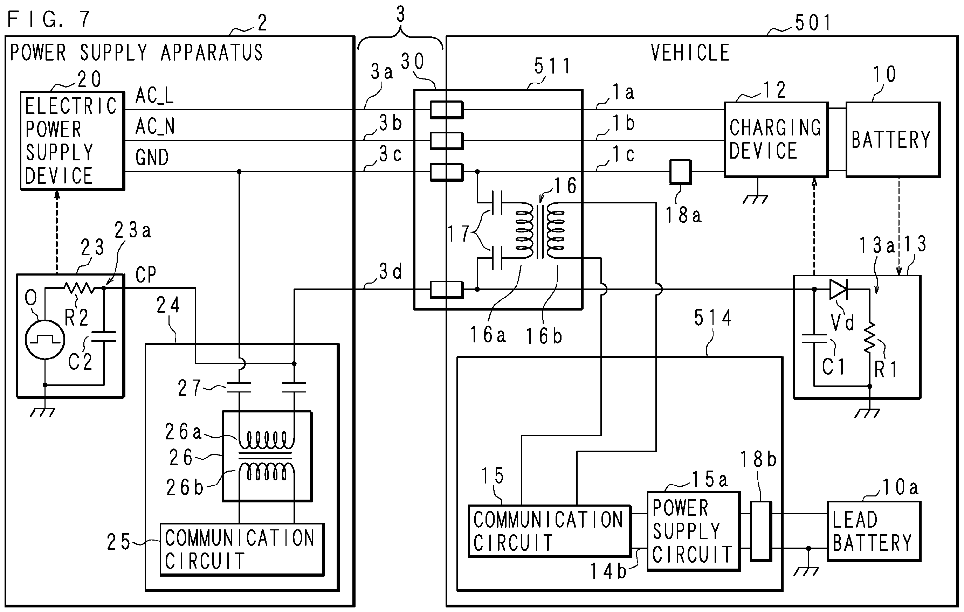

FIG. 7 is a circuit block diagram illustrating an exemplary configuration of a communication system according to Embodiment 5. In the communication system according to Embodiment 5, the configurations of a first PLC communication device 514 and a connector 511 are different from those of Embodiment 1. Thus, the following description is given mainly for these differences.

In the connector 511 provided in a vehicle 501 according to Embodiment 5, coupling capacitors 17 and a coupling transformer 16 are provided in the inside. That is, the coupling capacitors 17 and the coupling transformer 16 having been provided in the first PLC communication device 14 in Embodiment 1 are provided in the connector 511. The first PLC communication device 514 includes: a communication circuit 15 connected to the coupling transformer 16 of the connector 511; a power supply circuit 15a; and a second inductive element 18b. Similarly to Embodiment 3, the coupling capacitors 17 and the coupling transformer 16 are arranged on the circuit board and then the circuit board is covered by a cover made of resin.

Specifically, two branch lines each branching off from the control line 1d or the reference potential line 1c are connected through the coupling capacitors 17 to the coupling transformer 16. Each coupling capacitor 17 has a high impedance for the control pilot signal and has a low impedance for the differential signal. The coupling transformer 16 includes a primary coil 16a and a secondary coil 16b magnetically coupled to the primary coil 16a. The two branch lines are connected through the coupling capacitors 17 to both ends of the primary coil 16a. One end part of each of the two wires is connected to each end of the secondary coil 16b. Then, the other end parts of the two wires are connected to the communication circuit 15 of the first PLC communication device 14.

The communication system according to Embodiment 5 has operation effects similar to those of Embodiment 1.

### (Embodiment 6)

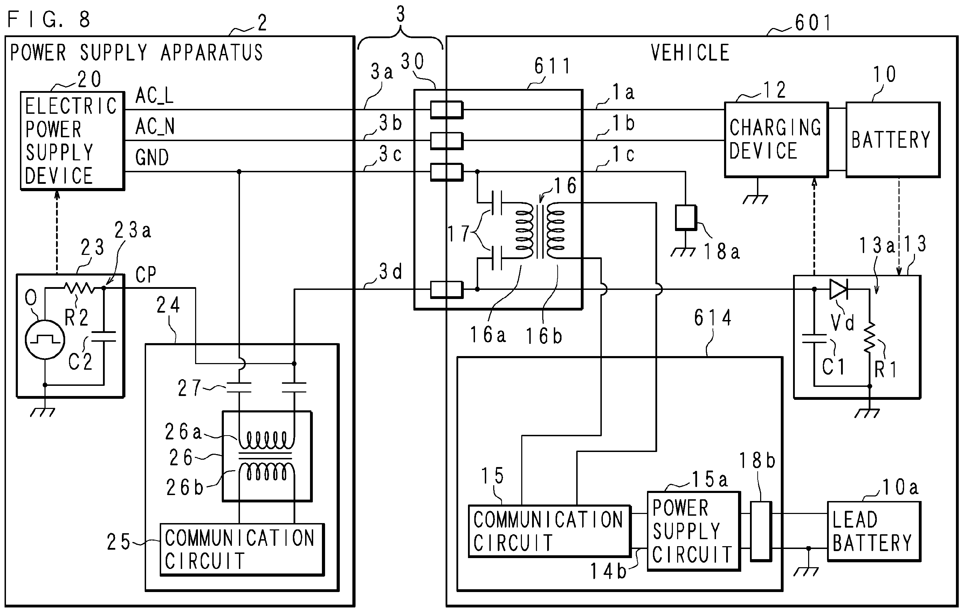

FIG. 8 is a circuit block diagram illustrating an exemplary configuration of a communication system according to Embodiment 6. In the communication system according to Embodiment 6, the configurations of a first PLC communication device 614 and a connector 611 are different from those of Embodiment 2. Thus, the following description is given mainly for these differences.

In the connector 611 provided in a vehicle 601 according to Embodiment 6, coupling capacitors 17 and a coupling transformer 16 are provided in the inside. That is, the coupling capacitors 17 and the coupling transformer 16 having been provided in the first PLC communication device 14 in Embodiment 2 are provided in the connector 611. The first PLC communication device 614 includes: a communication circuit 15 connected to the coupling transformer 16 of the connector 611; a power supply circuit 15a; and a second inductive element 18b. The configuration of the coupling capacitors 17 and the coupling transformer 16 is similar to that of Embodiment 5. Thus, detailed description is not given.

The communication system according to Embodiment 6 has operation effects similar to those of Embodiment 2.

### (Embodiment 7)

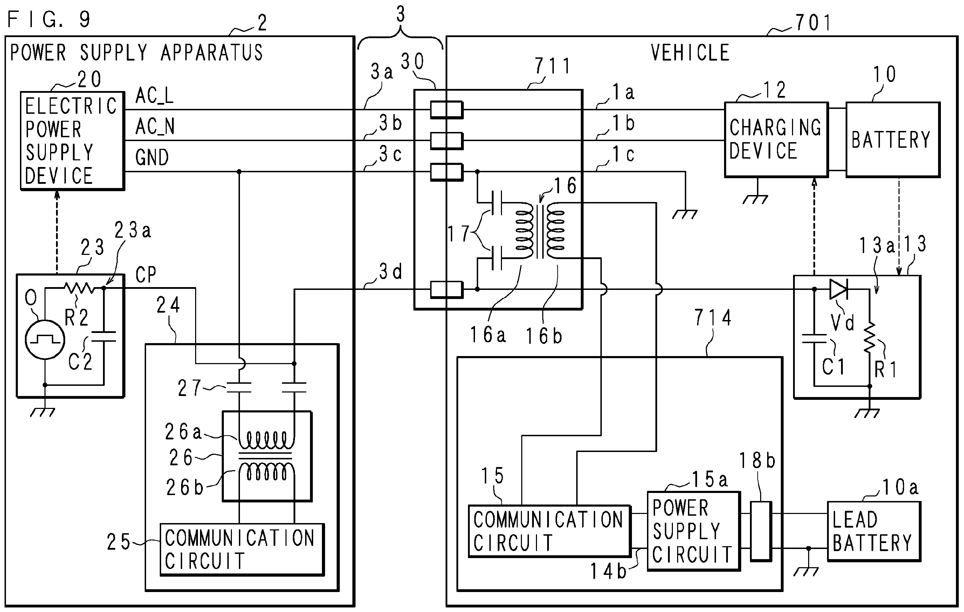

FIG. 9 is a circuit block diagram illustrating an exemplary configuration of a communication system according to Embodiment 7. In the communication system according to Embodiment 7, the configurations of a first PLC communication device 714 and a connector 711 are different from those of Embodiment 3. Thus, the following description is given mainly for these differences.

In the connector 711 provided in a vehicle 701 according to Embodiment 7, coupling capacitors 17 and a coupling transformer 16 are provided in the inside. That is, the coupling capacitors 17 and the coupling transformer 16 having been provided in the first PLC communication device 714 in Embodiment 3 are provided in the connector 711. The first PLC communication device 714 includes: a communication circuit 15 connected to the coupling transformer 16 of the connector 711; a power supply circuit 15a; and a second inductive element 18b. The coupling capacitors 17 and the coupling transformer 16 together with the inductive element 18a are arranged on the circuit board 11d and then covered by the cover 11f made of resin. The other configuration of the coupling capacitors 17 and the coupling transformer 16 is similar to that of Embodiment 5. Thus, detailed description is not given.

The communication system and the connector 711 of Embodiment 7 have operation effects similar to those of Embodiments 1 to 3. Further, the coupling capacitors 17 and the coupling core performing superposition and separation of the differential signal are arranged at a position closer to the power supply apparatus 2 and then the inductive element 18a is provided in a vicinity of the coupling capacitors 17 and the coupling core. Thus, a possibility is reduced that a common mode noise generated in the control line 1d or 3d and the reference potential line 1c or 3c is converted into a differential mode noise. Accordingly, the malfunctioning of the first PLC communication device 714 caused by the differential mode noise is allowed to be more effectively avoided.

### [Description of Reference Numerals]

- 1, 201, 301, 401, 501, 601, 701, 1001: Vehicle
- 1a, 1b, 3a, 3b, 1001a, 1001b: Power feed line
- 1c, 1e, 3c, 1001c: Reference potential line
- 1d, 3d, 1001d: Control line
- 2: Power supply apparatus
- 3: Charging cable
- 10: Battery
- 10a: Lead battery
- 11, 211, 311, 411, 511, 611, 711: Connector
- 11a: Container member
- 11b: Attaching part
- 11c: Cylindrical part
- 11d: Circuit board
- 11e: Detection circuit
- 11f: Cover
- 12: Charging device
- 13: First charging control device (communication device)
- 13a: CP receiving circuit (receiving circuit)
- 14, 214, 314, 514, 614, 714: First PLC communication device
- 14a: Circuit board
- 14b: Wire
- 14c: Cover
- 15: Communication circuit
- 15a: Power supply circuit
- 16: Coupling transformer
- 16a: Primary coil
- 16b: Secondary coil
- 17: Coupling capacitor
- 18a, 18b, 19: Inductive element
- 20: Electric power supply device
- 23: Second charging control device
- 23a: CP transmitting circuit
- 24: Second PLC communication device
- 25: Communication circuit
- 26: Coupling transformer
- 26a: Primary coil
- 26b: Secondary coil
- 27: Coupling capacitor
- 30: Charging gun
- 1031: CP receiving circuit
- 1014: PLC communication device
- C1, C2: Capacitor
- R1, R2: Resistor
- O: Oscillation circuit
- Vd: Diode

## Claims

1. A communication system comprising:
a control line (1d) transmitting a control signal for controlling charging of a battery (10) mounted on a vehicle (1);
a reference potential line (1c) connected to a reference potential;
a communication device connected to the control line (1d) and the reference potential line (1c) serving as a transmission medium of a differential signal and superposing onto the control signal the differential signal having a higher frequency than the control signal so as to perform communication with an external power supply apparatus (2); and
a first inductive element (18a) which is provided at a point of connection between the reference potential line (1c) and the reference potential or provided in the reference potential line (1c), the first inductive element (18a) having impedance for a noise having a higher frequency than the control signal is higher than the impedance for the control signal;
**characterized in** further comprising:
a wire (14b) for connecting the communication device to another battery (10); and
a second inductive element (18b) which is provided at a point of connection between the wire (14b) and the other battery (10) or provided in the wire (14b), the second inductive element (18b) having impedance for a noise having a higher frequency than the control signal that is higher than the impedance for the control signal;
wherein the first inductive element (18a) and the second inductive element (18b) are arranged to suppress that a common mode noise generated in the control line (1d) and the reference potential line (1c) is converted into a differential mode noise; and
wherein the first inductive element (18a) is a choke coil, and wherein no choke coil is provided in the control line (1d).

2. The communication system according to claim 1, wherein
the communication device includes:
a circuit board (14a) holding the second inductive element (18b); and
a cover (14c) made of resin and covering the circuit board (14a) holding the second inductive element (18b).

3. The communication system according to claim 2, wherein
the communication device includes:
a filter separating the differential signal from the control signal; and
a coupling transformer (16) connected to the filter, and wherein
the cover (14c) is constructed such as to cover the filter and the coupling transformer (16).

4. The communication system according to any one of claims 1 to 3, comprising
a receiving circuit connected to the control line (1d) so as to receive a control signal transmitted from the external power supply apparatus (2).

5. The communication system according to claim 4, comprising
a third inductive element (19) which is provided in a wire connecting the receiving circuit to the reference potential and the third inductive element (19) having impedance for a noise having a higher frequency than the control signal is higher than the impedance for the control signal.

## Patentansprüche

1. Kommunikationssystem mit:
einer Steuerleitung (1d), die ein Steuersignal zum Steuern eines Ladevorgangs einer in einem Fahrzeug (1) angebrachten Batterie (10) überträgt;
einer Referenzpotentialleitung (1c), die mit einem Referenzpotential verbunden ist;
einer Kommunikationseinrichtung, die mit der Steuerleitung (1d) und der Referenzpotentialleitung (1c) verbunden ist, welche als Übertragungsmedium eines Differenzialsignals dienen, und das Differenzialsignal, das eine höhere Frequenz als das Steuersignal aufweist, dem Steuersignal überlagert, um derart Kommunikation mit einer externen Stromversorgungsvorrichtung (2) durchzuführen; und
einer ersten Induktivität (18), die an einem Verbindungspunkt zwischen der Referenzpotentialleitung (1c) und dem Referenzpotential bereitgestellt ist oder entlang der Referenzpotentialleitung (1c) bereitgestellt ist, wobei die erste Induktivität (18a) eine Impedanz für ein Störsignal mit höherer Frequenz als das Steuersignal aufweist, die höher als die Impedanz für das Steuersignal ist;
ferner **gekennzeichnet durch**:
einen Draht (14b) zum Verbinden der Kommunikationseinrichtung mit einer weiteren Batterie (10); und
eine zweite Induktivität (18b), die an einem Verbindungspunkt zwischen dem Draht (14b) und der weiteren Batterie (10) bereitgestellt ist oder entlang des Drahts (14b) bereitgestellt ist, wobei die zweite Induktivität (18b) eine Impedanz für ein Störsignal mit höherer Frequenz als das Steuersignal aufweist, die höher als die Impedanz für das Steuersignal ist;
wobei die erste Induktivität (18a) und die zweite Induktivität (18b) derart angeordnet sind, dass sie einer Umwandlung eines in der Steuerleitung (1d) und der Referenzpotentialleitung (1c) generierten Gleichtakt-Störsignals in ein Gegentakt-Störsignal entgegenwirken; und
wobei die erste Induktivität (18a) eine Drosselspule ist, und wobei in der Steuerleitung (1d) keine Drosselspule bereitgestellt ist.

2. Kommunikationssystem nach Anspruch 1, wobei
die Kommunikationseinrichtung aufweist:
eine Leiterplatte (14a), welche die zweite Induktivität (18b) hält; und
eine Abdeckung (14c), die aus Kunststoff hergestellt ist und die Leiterplatte (14a), welche die zweite Induktivität (18b) hält, abdeckt.

3. Kommunikationssystem nach Anspruch 2, wobei
die Kommunikationseinrichtung aufweist:
einen Filter, welcher das Differenzialsignal von dem Steuersignal trennt; und
einen Kopplungstransformator (16), der mit dem Filter verbunden ist, und wobei
die Abdeckung (14c) derart konstruiert ist, dass sie den Filter und den Kopplungstransformator (16) abdeckt.

4. Kommunikationssystem nach einem der Ansprüche 1 bis 3 mit
einer Empfangsschaltung, die mit der Steuerleitung (1d) verbunden ist, um ein von der externen Stromversorgungsvorrichtung (2) übertragenes Steuersignal zu empfangen.

5. Kommunikationssystem nach Anspruch 4 mit
einer dritten Induktivität (19), die entlang eines Drahts bereitgestellt ist, welcher die Empfangsschaltung mit dem Referenzpotential verbindet, wobei die dritte Induktivität (19) eine Impedanz für ein Störsignal mit höherer Frequenz als das Steuersignal aufweist, die höher als die Impedanz für das Steuersignal ist.

## Revendications

1. Système de communication comprenant :
une ligne de commande (1d) transmettant un signal de commande pour commander la charge d'une batterie (10) montée sur un véhicule (1) ;
une ligne de potentiel de référence (le) reliée à un potentiel de référence ;
un dispositif de communication relié à la ligne de commande (1d) et à la ligne de potentiel de référence (le) servant de moyen de transmission d'un signal différentiel et superposant sur le signal de commande le signal différentiel ayant une fréquence plus élevée que le signal de commande afin d'effectuer une communication avec un appareil d'alimentation en énergie externe (2) ; et
un premier élément inductif (18a) qui est disposé au niveau d'un point de connexion entre la ligne de potentiel de référence (le) et le potentiel de référence ou disposé dans la ligne de potentiel de référence (le), le premier élément inductif (18a) ayant une impédance pour un bruit ayant une fréquence plus élevée que le signal de commande qui est supérieure à l'impédance pour le signal de commande ;
**caractérisé en ce qu'**il comprend en outre :
un fil (14b) pour relier le dispositif de communication à une autre batterie (10) ; et
un deuxième élément inductif (18b) qui est disposé au niveau d'un point de connexion entre le fil (14b) et l'autre batterie (10) ou disposé dans le fil (14b), le deuxième élément inductif (18b) ayant une impédance pour un bruit ayant une fréquence plus élevée que le signal de commande qui est supérieure à l'impédance pour le signal de commande ;
dans lequel le premier élément inductif (18a) et le deuxième élément inductif (18b) sont agencés pour supprimer le fait qu'un bruit de mode commun généré dans la ligne de commande (1d) et la ligne de potentiel de référence (le) soit converti en un bruit de mode différentiel ; et
dans lequel le premier élément inductif (18a) est une bobine d'arrêt, et dans lequel aucune bobine d'arrêt n'est disposée dans la ligne de commande (1d).

2. Système de communication selon la revendication 1, dans lequel le dispositif de communication inclut :
une carte de circuit imprimé (14a) contenant le deuxième élément inductif (18b) ; et
un couvercle (14c) en résine et recouvrant la carte de circuit imprimé (14a) contenant le deuxième élément inductif (18b).

3. Système de communication selon la revendication 2, dans lequel le dispositif de communication inclut :
un filtre séparant le signal différentiel du signal de commande ; et
un transformateur de couplage (16) relié au filtre, et dans lequel
le couvercle (14c) est construit de manière à recouvrir le filtre et le transformateur de couplage (16).

4. Système de communication selon l'une quelconque des revendications 1 à 3, comprenant
un circuit de réception relié à la ligne de commande (1d) afin de recevoir un signal de commande transmis par l'appareil d'alimentation en énergie externe (2).

5. Système de communication selon la revendication 4, comprenant
un troisième élément inductif (19) qui est disposé dans un fil reliant le circuit de réception au potentiel de référence et le troisième élément inductif (19) ayant une impédance pour un bruit ayant une fréquence plus élevée que le signal de commande qui est supérieure à l'impédance pour le signal de commande.
